# EUROPEAN PATENT SPECIFICATION

(11) **EP 3 119 722 B1**
(45) Date of publication and mention of the grant of the patent: **07.10.2020**
(21) Application number: 15709315.4
(22) Date of filing: 05.03.2015
(51) Int. Cl.: C02F 1/32

(54) **POND FILTERS AND UV FILTER CHAMBERS FOR POND FILTERS**
TEICHFILTER UND UV-FILTERKAMMERN FÜR TEICHFILTER
FILTRES POUR BASSIN, ET CHAMBRES DE FILTRE UV POUR FILTRES POUR BASSIN

(30) Priority: 17.03.2014 GB 201404817
(43) Date of publication of application: 25.01.2017
(73) Proprietor: SA EXEL Industries, 75009 Paris (FR)
(72) Inventor: OSMENT, Matthew, Southwater West Sussex RH13 9HX (GB)
(74) Representative: CSY London
(86) International application number: PCT/GB2015/050628
(87) International publication number: WO 2015/140505

(56) References cited:
- FR-A1- 2 879 589

## Description

This invention relates to pond filters including UV filter chambers and to UV filter chambers for pond filters.

UV filters are often used as part of garden pond filters due to the clarifying effects which UV light can provide. Of course the use of a UV filter involves illuminating the water to be filtered using a UV lamp. This therefore requires that adequate sealing is provided in the filter to ensure that the water to be filtered does not reach the live electrical elements associated with the UV lamp.

Further, in general, there is a need to carry out maintenance in respect of garden pond filters such as replacing worn out UV lamps. Thus, arrangements provided for sealing against the unwanted ingress of water need to be such as to allow for such maintenance.

Typically in a pond filter including a UV filter chamber, the UV lamp itself is housed within a tube through which the UV light may pass to illuminate the water. Typically such a tube may be a quartz tube. The region inside the tube forms part of a dry region of the unit into which the ingress of water should be prevented. Thus typically some mechanism is needed in order to mount the tube in the unit and provide a seal against water leaking into the tube.

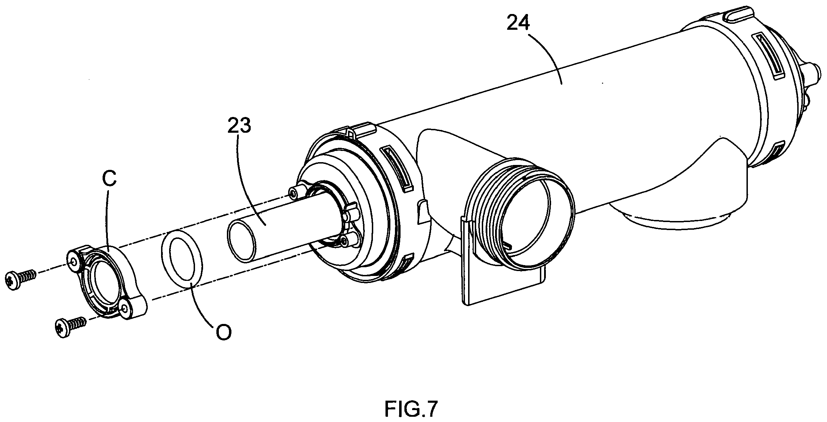

Figure 7 schematically illustrates one such existing arrangement. The tube 23 in which the UV lamp is housed is provided within a shroud portion 24 and a seal is created between the ends of the tube 23 and shroud portion 24 using an O-ring O which is fitted over the end of the tube 23 and then clamped in position using a clamp 24 and appropriate screws.

This arrangement will provide adequate sealing between the tube 23 and the shroud portion 24 but it has various drawbacks. For example: the screws can be over tightened, potentially damaging the glass; the screws can be under tightened leaving the unit unsealed; the O-ring can easily be left out of the assembly; the O-ring can be difficult to remove from the tube after use, leading to possible damage to the tube if a tool is used to remove it; and the screws may be hard to access in the overall assembly. Thus there is a desire to provide an alternative means for providing a seal between such a tube and shroud portion.

The present invention is aimed at providing such alternative sealing mechanisms.

FR2879589 discloses a waterproofing device for UV water sterilizers comprising a flexible washer designed to seal between the end of a sheath containing a UV lamp and the walls of a chamber around the sheath, a flexible O-ring designed to seal between the side wall of the sheath and a top wall of the chamber, an end piece secured to the top of the chamber and a nut screwed onto the end piece defining a cavity designed to contain the washer and the O-ring.

According to a first aspect of the invention there is provided a pond filter comprising a housing having a fluid inlet and a fluid outlet, and a UV filter chamber disposed in a fluid flow path between the inlet and the outlet,
the UV filter chamber comprising a UV lamp disposed in a tube and arranged for illuminating water flowing through the UV filter chamber,
the UV filter chamber comprising a shroud portion in which the tube and UV lamp are disposed, with a fluid channel through the UV filter chamber being defined between the tube and the shroud portion,
the UV filter chamber comprising at least one sealing arrangement provided between the tube and the shroud portion for sealing against the ingress of fluid into the interior of the tube from the fluid channel,
the sealing arrangement comprising a sealing assembly for mounting the tube to the shroud portion and sealing means for forming a seal between the sealing assembly and the tube,
wherein the sealing assembly comprises a nut for engagement with the shroud portion and which carries a bushing, and the sealing means comprises a seal which is retained between the nut and the bushing and is urged by the nut and bushing into sealing contact with the tube and creates a seal against the outside surface of the tube as the nut is engaged onto the shroud portion.

Such an arrangement can help ensure that effective sealing will be achieved and can ease mounting and sealing to the tube during assembly and/or maintenance. It can also ease disassembly - in particular it can ease removal of the seal from the tube.

The nut and shroud portion may be arranged so that the nut is engageable on the shroud portion by rotation of the nut relative to the shroud portion. Further the nut and shroud may be arranged so that such rotation causes tightening of the nut to the shroud portion due to a camming action between the nut and the shroud portion.

The nut may be arranged for threaded engagement with the shroud portion such that the nut may be tightened onto the shroud portion. In alternatives, for example, a bayonet fitting may be provided between the nut and the shroud portion allowing tightening of the nut onto the shroud portion.

The seal may be compressed by the nut and the bushing as the nut is engaged onto the shroud portion. Said seal may be an O-ring seal.

The bushing may have a shroud bearing portion which bears on a corresponding portion of the shroud portion as the nut is tightened onto the shroud portion.

The nut and bushing may define a seal containing region in which the seal is disposed and having side walls which constrain movement of the seal, with the bushing comprising at least one of those side walls and the nut comprising at least one of those side walls.

The sealing arrangement may comprise second sealing means for forming a seal between the sealing assembly and the shroud portion. The second sealing means may comprise a second O-ring. The second sealing means may be provided on the bushing. The second sealing means may be provided to seal between an outer circumferential wall of the bushing and an inner circumferential wall of the shroud portion.

The bushing may be captured by the nut so that when the sealing assembly is removed from the shroud portion, the bushing remains together with the nut and the seal remains retained between the nut and the bushing.

This can help ensure that the seal is not inadvertently omitted during assembly and/or maintenance. It may also help ensure that sealing surfaces on the nut and/or bushing remain free from dirt or debris that may adversely affect sealing.

The bushing may be a snap fit with the nut.

The nut and bushing may comprise at least one catch portion and at least one complementary projection over which the catch portion rides as the nut and bushing are snap fitted together with one of the catch portion and the complementary portion being provided on the nut and the other being provided on the bushing.

In one embodiment the nut comprises a plurality of catch portions and the bushing comprises a complementary projecting lip over which the catch portions ride.

Where there are a plurality of catch portions and a plurality of complementary projections in some circumstances some of each may be provided on the bushing and some of each provided on the nut.

Preferably the bushing is captured by the nut in such a way as to allow relative axial movement between the nut and the bushing as the nut is tightened onto the shroud portion. Thus for example, the nut and bushing may be arranged such that where at least one catch portion and at least one complementary projection is provided, after the catch has ridden over the projection to capture the bushing to the nut, axial movement of the catch relative to the projection and hence bushing relative to the nut is allowed over a predetermined range.

The bushing may be locked against rotation relative to the nut. In such a case the bushing will rotate with the nut as it is tightened onto the shroud and this can help minimise wear on the seal.

At least one complementary projection and recess may be provided on the nut and bushing to lock the bushing against rotation relative to the nut with one of the projection and recess being provided on the bushing and the other on the nut. The projection may be a leg which may be provided on the bushing. The recess may be a slot which may be provided in the nut.

Where there are a plurality of projections and recesses, in some circumstances some of each may be provided on the bushing and some of each provided on the nut.

In presently preferred embodiments the projection and recess for locking against relative rotation are separate from the catch portion and projection for capturing, however, in alternatives the same parts might perform both functions.

The sealing arrangement may comprise at least one tube guide surface for controlling the position of the tube relative to the remainder of the UV filter chamber, in particular the longitudinal position of the tube relative to the shroud portion.

The tube guide surface may comprise an end stop for acting on a respective end of the tube.

Such features can, for example, help in centring of the tube, longitudinally, in the UV filter chamber, and can help ease assembly and/or maintenance operations.

The UV filter chamber may comprise a limit stop for guarding against over tightening of the nut onto the shroud portion. The limit stop may comprise a pair of complementary abutting portions which are arranged to abut with one another to resist further tightening of the nut. One of the abutting portions may be provided on the sealing assembly, preferably the nut, and the other may be provided on the remainder of the UV filter chamber, preferably the shroud portion.

The abutting portions may be arranged so as to provide a visual and/or physical indication that the nut has been tightened to a predetermined desired degree.

Indicator portions may be provided to provide a visual indication that the nut has been tightened to a predetermined desired degree. One may be provided on the sealing assembly, preferably the nut and the other may be provided on the remainder of the UV filter chamber, preferably the shroud portion. One or more of the indicator portions may also act as an abutting portion.

The tube may be an open ended tube, ie have two open ends.

There may be a pair of sealing arrangements, each for mounting and sealing a respective end of the tube.

The pond filter may comprise other components, such as, one or more of the following, for example: a pump for causing fluid flow through the filter, a mechanical filter portion, a biological filter portion, a cleaning mechanism and so on.

According to a second aspect of the invention there is provided a UV filter chamber for a pond filter,
the UV filter chamber comprising a tube for housing a UV lamp for illuminating water flowing through the UV filter chamber,
the UV filter chamber comprising a shroud portion in which the tube is disposed with a fluid channel through the UV filter chamber being defined between the tube and the shroud portion,
the UV filter chamber comprising at least one sealing arrangement provided between the tube and the shroud portion for sealing against the ingress of fluid into the interior of the tube from the fluid channel,
the sealing arrangement comprising a sealing assembly for mounting the tube to the shroud portion and sealing means for forming a seal between the sealing assembly and the tube,
wherein the sealing assembly comprises a nut for engagement with the shroud portion and which carries a bushing, and the sealing means comprises a seal which is retained between the nut and the bushing and is urged by the nut and bushing into sealing contact with the tube and creates a seal against the outside surface of the tube as the nut is engaged onto the shroud portion.

In general terms each of the optional sub-features mentioned after the first aspect of the invention is equally applicable as an optional sub-feature of the second aspect of the invention. They are not rewritten here in full purely in the interests of brevity.

Embodiments of the present invention will now be described, by way of example only, with reference to the accompanying drawings, in which:
Figure 1 schematically shows a pond filter;
Figure 2 shows a UV filter chamber of the pond filter shown in Figure 1 in a partly disassembled state;
Figure 3 shows an end portion of the UV chamber shown in Figure 2 when assembled;
Figure 4 shows an exploded view of a sealing arrangement which is part of the UV filter chamber shown in Figures 2 and 3;
Figure 5 shows a nut of the sealing arrangement shown in Figure 4;
Figure 6A is a sectional view showing part of the UV filter chamber shown in Figures 2 and 3, illustrating a state when the sealing arrangement begins to be mounted onto a shroud portion of the UV filter chamber;
Figure 6B shows the same view of that in Figure 6A but with the sealing arrangement completely mounted on the shroud portion and in a sealing configuration; and
Figure 7 shows a prior art sealing arrangement.

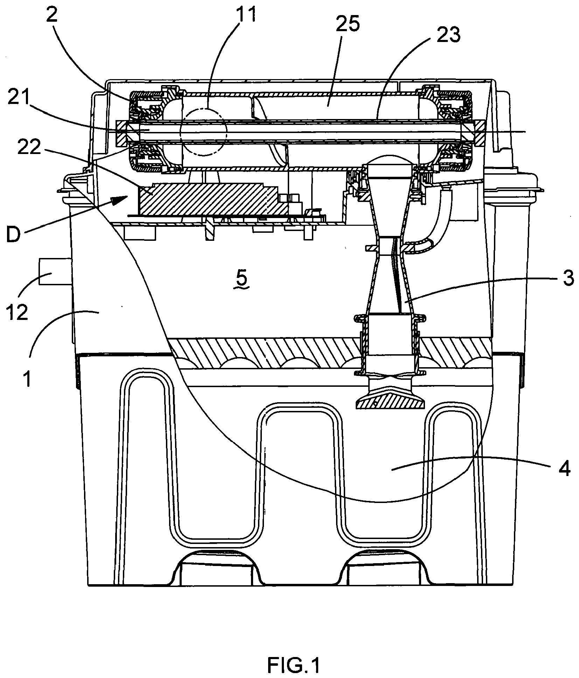

Figure 1 shows a garden pond filter comprising a housing 1 having an inlet 11 (schematically indicated only) through which water is drawn into the filter and an outlet 12 through which water leaves the filter. Situated in this fluid flow path through the filter is a UV filter chamber 2, a venturi 3, a biological filter region 4 which can be filled with appropriate bio media, and a mechanical filter region 5 which can house an appropriate mechanical filter such as foam. It should be appreciated that in other embodiments different components might be included in the filter along with the UV filter chamber 2, such as a pump, for example, or a cleaning mechanism or different filtering compartments.

The filter includes a dry region D in which electrical components of the filter are housed. In the present instance these electrical components comprise a UV lamp 21 (which forms part of the UV filter chamber 2) and its associated power supply and control electronics 22. The filter unit is arranged in order to substantially prevent the ingress of water into this dry region. At least part of this involves providing a seal between a tube 23 which houses the UV lamp 21 and the remainder of the UV filter chamber 2. It is this aspect of the filter which is of particular interest in the present specification and this will be described in further detail below.

Note that in some circumstances the UV filter chamber 2 may be provided separately to the remainder of the pond filter, perhaps as a replacement part or an upgrade.

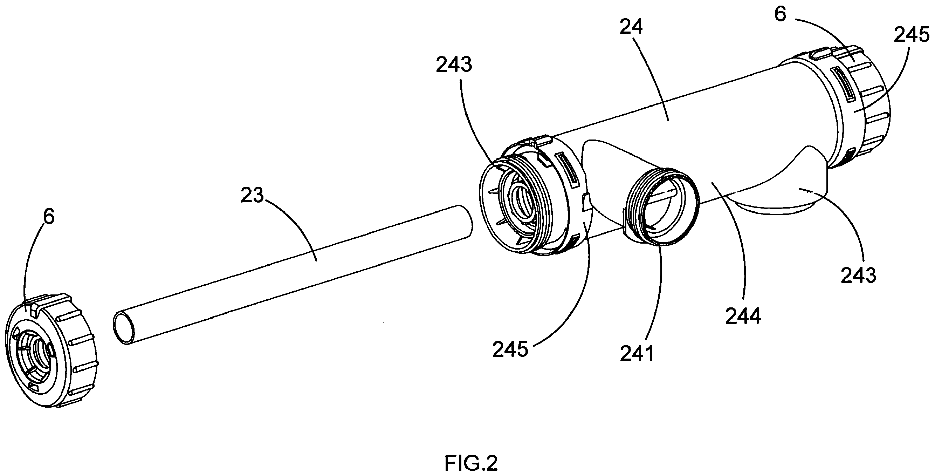

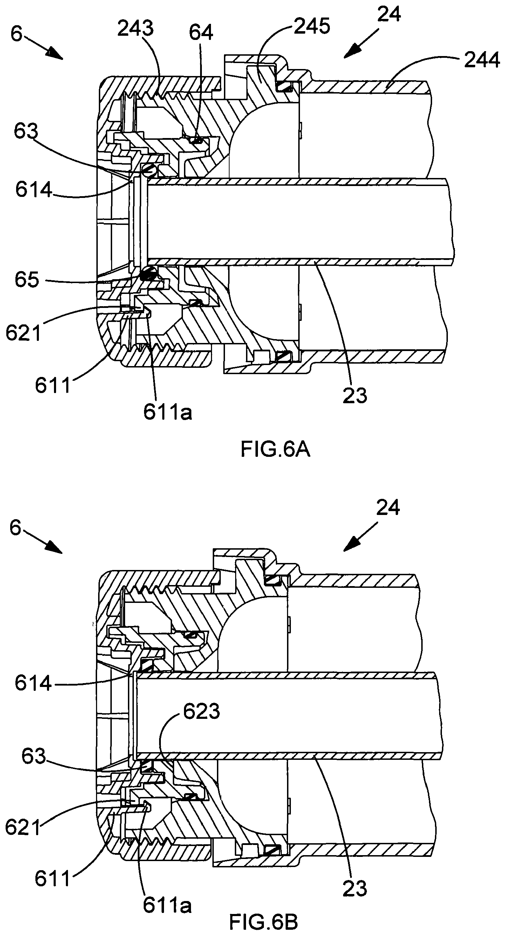

Figures 2 to 6A and 6B show the UV filter chamber 2 and various subcomponents of it in greater detail.

The UV chamber 2 comprises a shroud portion 24 which houses the tube 23 within which the UV lamp 21 itself is housed. In the present embodiment the shroud portion 24 comprises three main portions, namely a central tube 244 and first and second end cap portions 245. Thus the lamp 21, tube 23 and shroud portion are all generally cylindrical. As perhaps best seen in Figure 1, a fluid channel 25 through which water to be filtered passes, is defined between the shroud portion 24 and the tube 23. The UV chamber 2 is arranged to avoid ingress of water into the interior of the tube 23 from this flow channel 25. As can be seen in Figure 2, the shroud portion 24 has an inlet 241 which in this embodiment is arranged for connection with the inlet 11 of the filter as a whole. Further the shroud portion 24 has an outlet 242, which in the present embodiment is arranged for connection to the venturi 3. At each end of the shroud portion 24 there is provided a sealing arrangement 6.

The tube 23 housing the UV lamp 21 in the present embodiment has two open ends because the present embodiment is designed for use with a UV lamp 21 having terminals at both ends. Thus one of sealing arrangements 6 is provided for mounting a first end of the tube 23 in the shroud portion 24 and providing in a seal between the tube 23 and the shroud portion 24 and the other sealing arrangement 6 is provided for mounting the other end of the tube 23 and providing the appropriate seal.

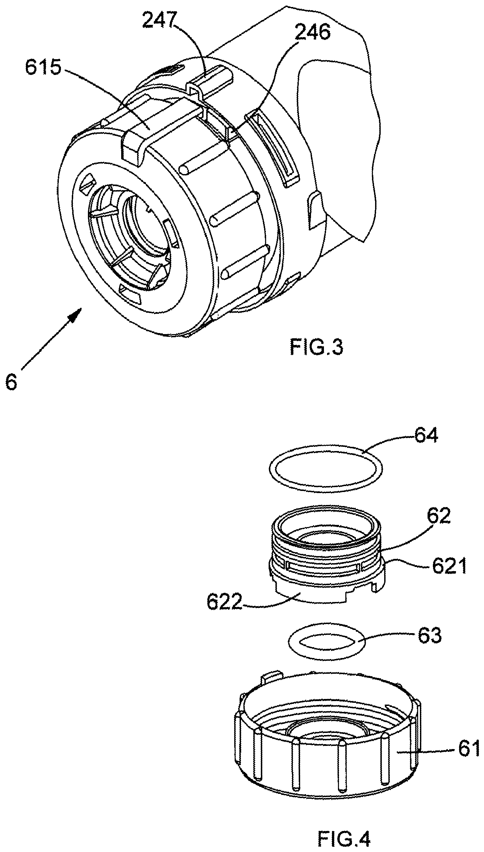

Figure 2 shows the UV filter chamber 2 in a partial state of disassembly with one of the sealing arrangements 6 removed and the tube 23 removed from inside of the shroud portion 24. On the other hand Figure 3 shows the UV chamber 2 once this sealing arrangement 6 and the tube 23 have been fully mounted into the shroud portion 24.

Each sealing arrangement 6, as best appreciated in Figure 4, comprises a nut 61 which carries a bushing 62. The nut 61 and bushing 62 are each generally annular having a central aperture through which connections to the UV lamp 21 may pass. These components together can be considered to be a sealing assembly. Retained between the nut 61 and bushing 62 is an O-ring 63 for sealing to an outside surface of the respective end of the tube 23. The bushing 62 also carries a second seal 64, which again may be an O-ring seal, which is for providing a seal between the bushing 62, and hence whole sealing assembly, and the shroud portion 24.

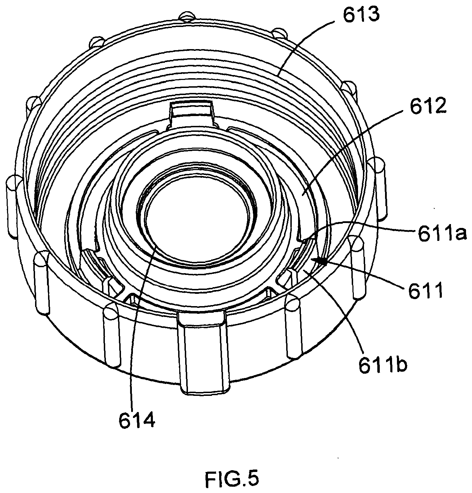

Figure 5 is a view of the nut 61 in isolation better showing some of the internal features of the nut. The nut 61 and bushing 62 are arranged to be a snap fit with one another. A plurality of catch portions 611 (in this embodiment 3) are provided on the nut 61. Each catch portion 611 comprises a detent 611a and a resilient arm portion 611b. The catch portions 611 are arranged to ride over and catch on a lip 621 provided on the bushing 62 when the bushing 62 is snap fitted into connection with the nut 61. Once this is done with the O-ring 63 correctly placed between the bushing 62 and the nut 61, the O-ring 63 is captured within the sealing arrangement 6. On the other hand, whilst the bushing 62 and O-ring 63 are captured relative to the nut 61, the catch portion 611 and bushing 62 are arranged so that bushing 62 may still move axially relative to the nut 61 over a predetermined range.

The bushing 62 also comprises a plurality of legs 622 (in this embodiment 3) which are arranged for receipt in corresponding slots 612 provided in the nut 61. These legs 622 and slots 612 serve to engage with one another and resist, and in practical terms prevent, relative rotation between the bushing 62 and the nut 61. This can help prevent wear on the captured O-ring 63.

The nut 61 has an internal thread 613 (see for example Figure 5) which is arranged for threading engagement with a corresponding thread 243 (see for example Figure 2) on the respective end of the shroud portion 24. Thus the sealing arrangement 6 as a whole may be threadingly mounted onto the shroud portion 24 by rotation of the nut 61 about the axis of the shroud portion 24. As this is done, the O-ring 63 will be caused to pass over the respective end of the tube 23. Further, as will be explained in more detail below, as the nut 61 is tightened this serves to compress the O-ring 63 and create a seal against the appropriate outside surface of the tube 23 towards the respective end of the tube 23. At the same time the second seal 64 seals against an internal wall of the shroud portion 24.

Figure 6A shows one of the sealing arrangements 6 as this begins to be threadingly mounted on the shroud portion 24. Here the O-ring 63 can be seen to be disposed in an O-ring containing region 65 defined by side walls provided by the nut 61 and bushing 62. In the state shown in Figure 6A, the O-ring 63 is beginning to be located over the end of the tube 23 but is not in a compressed state. As the nut 61 continues to be tightened onto the shroud portion 24, the sealing arrangement 6 moves towards the shroud portion 24 and towards a position such as that shown in Figure 6B. Here a shroud bearing portion 623 of the bushing 62 has made contact with the shroud portion 24 which has stopped inward movement of the bushing 62 towards the shroud portion 24. Consequently this has served to move the bushing 62 axially relative to the nut 61 so compressing the O-ring 63 into a sealing engagement with the tube 23. Note that as this occurs, the detent 611a on each catch portion 611 has moved away from the lip 621 on the bushing 62 as can be seen by a comparison between Figure 6A and Figure 6B.

As may be seen in Figures 6A and 6B, the nut 61 comprises an end stop portion 614 for acting on the end of the tube 23 as the sealing arrangement 6 is mounted on the shroud portion 24. This end stop portion 614, in the present embodiment, is in the form of a lip at the inner circumference of the nut 61 and serves to guide the end of the tube 23 towards a central position in the shroud portion 24 during assembly. This feature in combination with the O-ring 63 being captured in the sealing arrangement 6 provides a particularly easy and convenient way for the user to mount, seal, and correctly position the tube 23 relative to the shroud portion 24.

As most clearly seen in Figure 3, the nut 61 also comprises an abutment portion 615 arranged for abutting with a corresponding abutment portion 246 provided on the shroud portion 24 when the nut 61 has been tightened to a predetermined desired degree. This can help prevent accidental over tightening of the nut 61 and can also provide an indication to the user that the nut has been sufficiently tightened. A further projection 247 is also provided on the shroud portion 24 which is arranged to align with the abutment portion 615 on the nut 61 when the nut 61 is correctly tightened to provide a visual indicator to the user that the nut 65 has been correctly tightened.

Note that although one of the sealing arrangements 6 has been described in detail in this specification, in the present embodiment both of the sealing arrangements 6 are identical to one another.

## Claims

1. A pond filter comprising a housing (1) having a fluid inlet (11) and a fluid outlet (12), and a UV filter chamber (2) disposed in a fluid flow path between the inlet (11) and the outlet (12),
the UV filter chamber (2) comprising a UV lamp (21) disposed in a tube (23) and arranged for illuminating water flowing through the UV filter chamber (2),
the UV filter chamber (2) comprising a shroud portion (24) in which the tube (23) and UV lamp (21) are disposed, with a fluid channel (25) through the UV filter chamber (2) being defined between the tube and the shroud portion (24),
the UV filter chamber (2) comprising at least one sealing arrangement (6) provided between the tube (23) and the shroud portion (24) for sealing against the ingress of fluid into the interior of the tube (23) from the fluid channel (25),
the sealing arrangement (6) comprising a sealing assembly for mounting the tube (23) to the shroud portion (24) and sealing means for forming a seal between the sealing assembly and the tube (23),
wherein the sealing assembly comprises a nut (61) for engagement with the shroud portion (24) and which carries a bushing (62), and the sealing means comprises a seal (63) which is retained between the nut (61) and the bushing (62) and is urged by the nut (61) and bushing (62) into sealing contact with the tube (23) and creates a seal against the outside surface of the tube (23) as the nut is engaged onto the shroud portion (24).

2. A pond filter according to claim 1 in which the nut (61) is arranged for threaded engagement with the shroud portion (24) such that the nut (61) may be tightened onto the shroud portion (24).

3. A pond filter according to claim 1 in which the nut (61) and bushing (62) define a seal containing region (65) in which the seal (63) is disposed and having side walls which constrain movement of the seal (63), with the bushing (62) comprising at least one of those side walls and the nut (61) comprising at least one of those side walls.

4. A pond filter according to claim 1 in which the bushing (62) is captured by the nut (61) so that when the sealing assembly is removed from the shroud portion (24), the bushing (62) remains together with the nut (61) and the seal (63) remains retained between the nut (61) and the bushing (62).

5. A pond filter according to claim 4 in which the bushing (62) is a snap fit with the nut (61).

6. A pond filter according to claim 5 in which the nut (61) and bushing (62) comprise at least one catch portion (611) and at least one complementary projection (621) over which the catch portion (611) rides as the nut (61) and bushing (62) are snap fitted together with one of the catch portion (611) and the complementary portion (621) being provided on the nut (61) and the other being provided on the bushing (62).

7. A pond filter according to claim 4 in which the bushing (62) is captured by the nut (61) in such a way as to allow relative axial movement between the nut (61) and the bushing (62) as the nut (61) is engaged onto the shroud portion (24).

8. A pond filter according to claim 1 in which the bushing (62) is locked against rotation relative to the nut (61).

9. A pond filter according to claim 1 in which the sealing arrangement (6) comprises at least one tube guide surface for controlling the position of the tube (23) relative to the remainder of the UV filter chamber (2), in particular the longitudinal position of the tube (23) relative to the shroud portion (24).

10. A pond filter according to claim 9 in which the tube guide surface comprises an end stop (614) for acting on a respective end of the tube (23).

11. A pond filter according to claim 1 in which the UV filter chamber (2) comprises a limit stop for guarding against over tightening of the nut (61) onto the shroud portion (24), the limit stop comprising a pair of complementary abutting portions (615, 246) which are arranged to abut with one another to resist further tightening of the nut (61) with one of the abutting portions (615, 246) provided on the sealing assembly and the other provided on the remainder of the UV filter chamber (2).

12. A pond filter according to claim 1 comprising indicator portions (615, 247) for providing a visual indication that the nut (61) has been tightened to a predetermined desired degree, with one indicator portion (615, 247) provided on the sealing assembly and another provided on the remainder of the UV filter chamber (2).

13. A UV filter chamber (2) for use a pond filter,
the UV filter chamber (2) comprising a tube (23) for housing a UV lamp (21) for illuminating water flowing through the UV filter chamber (2),
the UV filter chamber (2) comprising a shroud portion (24) in which the tube (23) is disposed with a fluid channel (25) through the UV filter chamber (2) being defined between the tube (23) and the shroud portion (24),
the UV filter chamber (2) comprising at least one sealing arrangement (6) provided between the tube (23) and the shroud portion (24) for sealing against the ingress of fluid into the interior of the tube (23) from the fluid channel (25),
the sealing arrangement (6) comprising a sealing assembly for mounting the tube (23) to the shroud portion (24) and sealing means for forming a seal between the sealing assembly and the tube (23),
wherein the sealing assembly comprises a nut (61) for engagement with the shroud portion (24) and which carries a bushing (62), and the sealing means comprises a seal (63) which is retained between the nut (61) and the bushing (62) and is urged by the nut (61) and bushing (62) into sealing contact with the tube (23) and creates a seal against the outside surface of the tube as the nut (61) is engaged onto the shroud portion (24).

## Patentansprüche

1. Teichfilter, umfassend ein Gehäuse (1) mit einem Fluideinlass (11) und einem Fluidauslass (12), und eine UV-Filterkammer (2), die in einem Fluidströmungsweg zwischen dem Einlass (11) und dem Auslass (12) angeordnet ist, wobei die UV-Filterkammer (2) eine UV-Lampe (21) umfasst, die in einer Röhre (23) angeordnet ist und zur Beleuchtung von durch die UV-Filterkammer (2) strömendem Wasser angeordnet ist, wobei die UV-Filterkammer (2) einen Mantelabschnitt (24) umfasst, in dem die Röhre (23) und die UV-Lampe (21) angeordnet sind, mit einem Fluidkanal (25) durch die UV-Filterkammer (2), der zwischen dem Rohr und dem Mantelabschnitt (24) definiert ist, wobei die UV-Filterkammer (2) mindestens eine Dichtungsanordnung (6) aufweist, die zwischen dem Rohr (23) und dem Mantelabschnitt (24) zur Abdichtung gegen das Eindringen von Fluid aus dem Fluidkanal (25) in das Innere des Rohrs (23) vorgesehen ist, wobei die Dichtungsanordnung (6) eine Dichtungsanordnung zum Befestigen des Rohrs (23) am Mantelabschnitt (24) und Dichtungsmittel zum Bilden einer Dichtung zwischen der Dichtungsanordnung und dem Rohr (23) umfasst, wobei die Dichtungsanordnung eine Mutter (61) zum Eingreifen mit dem Mantelabschnitt (24) umfasst und die eine Buchse (62) trägt, und wobei die Dichtungseinrichtung eine Dichtung (63) umfasst, die zwischen der Mutter (61) und der Buchse (62) gehalten wird und durch die Mutter (61) und die Buchse (62) in abdichtenden Kontakt mit dem Rohr (23) gedrückt wird und eine Dichtung gegen die Außenfläche des Rohrs (23) erzeugt, wenn die Mutter in den Mantelabschnitt (24) eingreift.

2. Teichfilter nach Anspruch 1, wobei die Mutter (61) für einen Gewindeeingriff mit dem Mantelabschnitt (24) derart angeordnet ist, dass die Mutter (61) auf dem Mantelabschnitt (24) angezogen werden kann.

3. Teichfilter nach Anspruch 1, wobei die Mutter (61) und die Buchse (62) einen Dichtungsaufnahmebereich (65) definieren, in dem die Dichtung (63) angeordnet ist, und Seitenwände aufweisen, die die Bewegung der Dichtung (63) einschränken, wobei die Buchse (62) mindestens eine dieser Seitenwände und die Mutter (61) mindestens eine dieser Seitenwände umfasst.

4. Teichfilter nach Anspruch 1, wobei die Buchse (62) von der Mutter (61) derart erfasst wird, dass beim Entfernen der Dichtungsanordnung vom Mantelabschnitt (24) die Buchse (62) mit der Mutter (61) verbunden bleibt und die Dichtung (63) zwischen der Mutter (61) und der Buchse (62) gehalten wird.

5. Teichfilter nach Anspruch 4, wobei die Buchse (62) in einer Schnappsitz-Verbindung mit der Mutter (61) angeordnet ist.

6. Teichfilter nach Anspruch 5, wobei die Mutter (61) und die Buchse (62) mindestens einen Fangabschnitt (611) und mindestens einen komplementären Vorsprung (621) aufweisen, über den der Fangabschnitt (611) gleitet, wenn die Mutter (61) und die Buchse (62) mittels Schnappsitz zusammengefügt werden, wobei entweder der Fangabschnitt (611) oder der komplementäre Abschnitt (621) an der Mutter (61) und der andere an der Buchse (62) angeordnet ist.

7. Teichfilter nach Anspruch 4, wobei die Buchse (62) von der Mutter (61) derart erfasst wird, dass sie eine relative Axialbewegung zwischen der Mutter (61) und der Buchse (62) zulässt, wenn die Mutter (61) in den Mantelabschnitt (24) eingreift.

8. Teichfilter nach Anspruch 1, bei dem die Buchse (62) gegen Drehung relativ zur Mutter (61) verriegelt ist.

9. Teichfilter nach Anspruch 1, wobei die Dichtungsanordnung (6) mindestens eine Rohrführungsfläche zur Steuerung der Position des Rohrs (23) relativ zum Rest der UV-Filterkammer (2), insbesondere der Längsposition des Rohrs (23) relativ zum Mantelabschnitt (24), aufweist.

10. Teichfilter nach Anspruch 9, wobei die Rohrführungsfläche einen Endanschlag (614) zur Einwirkung auf ein jeweiliges Ende des Rohres (23) aufweist.

11. Teichfilter nach Anspruch 1, wobei die UV-Filterkammer (2) einen Anschlag zum Schutz gegen übermäßiges Anziehen der Mutter (61) auf den Mantelabschnitt (24) aufweist, wobei der Anschlag ein Paar komplementärer Stoßabschnitte (615, 246) aufweist, die derart angeordnet sind, dass sie aneinander stoßen, um einem weiteren Anziehen der Mutter (61) entgegenzuwirken, wobei einer der Stoßabschnitte (615, 246) an der Dichtungsanordnung und der andere am Rest der UV-Filterkammer (2) angeordnet ist.

12. Teichfilter nach Anspruch 1, umfassend Indikatorabschnitte (615, 247) zur Bereitstellung einer visuellen Anzeige, dass die Mutter (61) bis zu einem vorbestimmten gewünschten Grad angezogen wurde, wobei ein Indikatorabschnitt (615, 247) an der Dichtungsanordnung und ein weiterer am Rest der UV-Filterkammer (2) angeordnet ist.

13. UV-Filterkammer (2) zur Verwendung eines Teichfilters, wobei die UV-Filterkammer (2) ein Rohr (23) zur Aufnahme einer UV-Lampe (21) zum Beleuchten von durch die UV-Filterkammer (2) fließendem Wasser umfasst, wobei die UV-Filterkammer (2) einen Mantelabschnitt (24) umfasst, in dem das Rohr (23) angeordnet ist, wobei ein Fluidkanal (25) durch die UV-Filterkammer (2) zwischen dem Rohr (23) und dem Mantelabschnitt (24) definiert ist, wobei die UV-Filterkammer (2) mindestens eine Dichtungsanordnung (6) aufweist, die zwischen dem Rohr (23) und dem Mantelabschnitt (24) zum Abdichten gegen das Eindringen von Fluid in das Innere des Rohrs (23) aus dem Fluidkanal (25) angeordnet ist, wobei die Dichtungsanordnung (6) eine Dichtungsanordnung zum Befestigen des Rohrs (23) an dem Mantelabschnitt (24) und Dichtungsmittel zum Bilden einer Dichtung zwischen der Dichtungsanordnung und dem Rohr (23) umfasst, wobei die Dichtungsanordnung eine Mutter (61) zum Eingreifen in den Mantelabschnitt (24) umfasst und die eine Buchse (62) trägt, und wobei die Dichtungseinrichtung eine Dichtung (63) umfasst, die zwischen der Mutter (61) und der Buchse (62) gehalten wird und durch die Mutter (61) und die Buchse (62) in abdichtenden Kontakt mit dem Rohr (23) gedrängt wird und eine Dichtung gegen die Außenfläche des Rohrs erzeugt, wenn die Mutter (61) in den Mantelabschnitt (24) eingreift.

## Revendications

1. Filtre pour bassin comportant un boîtier (1) ayant une entrée de fluide (11) et une sortie de fluide (12), et une chambre de filtre UV (2) disposée dans un trajet d'écoulement de fluide entre l'entrée (11) et la sortie (12),
la chambre de filtre UV (2) comportant une lampe UV (21) disposée dans un tube (23) et agencée pour éclairer l'eau s'écoulant au travers de la chambre de filtre UV (2),
la chambre de filtre UV (2) comportant une partie formant enveloppe (24), dans laquelle sont disposés le tube (23) et la lampe UV (21), avec un canal de fluide (25) au travers de la chambre de filtre UV (2) qui est défini entre le tube et la partie formant enveloppe (24),
la chambre de filtre UV (2) comportant au moins un agencement d'étanchéité (6) mis en œuvre entre le tube (23) et la partie formant enveloppe (24) pour assurer l'étanchéité contre la pénétration de fluide dans la partie intérieure du tube (23) depuis le canal de fluide (25),
l'agencement d'étanchéité (6) comportant un ensemble d'étanchéité servant à des fins de montage du tube (23) sur la partie formant enveloppe (24) et un moyen d'étanchéité servant à former un joint d'étanchéité entre l'ensemble d'étanchéité et le tube (23),
dans lequel l'ensemble d'étanchéité comporte un écrou (61) à des fins de mise en prise avec la partie formant enveloppe (24) et qui porte une douille (62), et le moyen d'étanchéité comporte un joint d'étanchéité (63) qui est retenu entre l'écrou (61) et la douille (62) et qui est sollicité par l'écrou (61) et la douille (62) en contact étanche avec le tube (23) et crée un joint d'étanchéité contre la surface extérieure du tube (23) au fur et à mesure que l'écrou est mis en prise sur la partie formant enveloppe (24).

2. Filtre pour bassin selon la revendication 1, dans lequel l'écrou (61) est agencé à des fins de mise en prise par filetage avec la partie formant enveloppe (24) de telle sorte que l'écrou (61) peut être serré sur la partie formant enveloppe (24).

3. Filtre pour bassin selon la revendication 1, dans lequel l'écrou (61) et la douille (62) définissent une région de réception de joint d'étanchéité (65) dans laquelle le joint d'étanchéité (63) est disposé et ayant des parois latérales qui limitent le mouvement du joint d'étanchéité (63), la douille (62) comportant au moins l'une de ces parois latérales et l'écrou (61) comportant au moins l'une de ces parois latérales.

4. Filtre pour bassin selon la revendication 1, dans lequel la douille (62) est capturée par l'écrou (61) de telle sorte que, quand l'ensemble d'étanchéité est retiré de la partie formant enveloppe (24), la douille (62) reste avec l'écrou (61) et le joint d'étanchéité (63) reste retenu entre l'écrou (61) et la douille (62).

5. Filtre pour bassin selon la revendication 4, dans lequel la douille (62) est un dispositif d'ajustement par encliquetage avec l'écrou (61).

6. Filtre pour bassin selon la revendication 5, dans lequel l'écrou (61) et la douille (62) comportent au moins une partie formant cliquet (611) et au moins une partie saillante complémentaire (621) sur laquelle la partie formant cliquet (611) monte quand l'écrou (61) et la douille (62) sont ajustés ensemble par encliquetage avec l'une parmi la partie formant cliquet (611) et la partie complémentaire (621) étant mise en œuvre sur l'écrou (61) et l'autre étant mise en œuvre sur la douille (62).

7. Filtre pour bassin selon la revendication 4, dans lequel la douille (62) est capturée par l'écrou (61) de telle manière à permettre un mouvement axial relatif entre l'écrou (61) et la douille (62) au fur et à mesure que l'écrou (61) est mis en prise sur la partie formant enveloppe (24).

8. Filtre pour bassin selon la revendication 1, dans lequel la douille (62) est bloquée contre toute rotation par rapport à l'écrou (61).

9. Filtre pour bassin selon la revendication 1, dans lequel l'agencement d'étanchéité (6) comporte au moins une surface de guidage de tube servant à contrôler la position du tube (23) par rapport au reste de la chambre de filtre UV (2), en particulier la position longitudinale du tube (23) par rapport à la partie formant enveloppe (24).

10. Filtre pour bassin selon la revendication 9, dans lequel la surface de guidage de tube comporte une butée d'extrémité (614) servant à agir sur une extrémité respective du tube (23).

11. Filtre pour bassin selon la revendication 1, dans lequel la chambre de filtre UV (2) comporte une butée de fin de course servant à protéger contre tout serrage excessif de l'écrou (61) sur la partie formant enveloppe (24), la butée de fin de course comportant une paire de parties de mise en butée complémentaires (615, 246) qui sont agencées pour venir se mettre en butée l'une par rapport à l'autre pour résister plus encore au serrage de l'écrou (61) avec l'une des parties de mise en butée (615, 246) mise en œuvre sur l'ensemble d'étanchéité et l'autre mise en œuvre sur le reste de la chambre de filtre UV (2).

12. Filtre pour bassin selon la revendication 1, comportant des parties formant indicateur (615, 247) servant à fournir une indication visuelle comme quoi l'écrou (61) a été serré selon un degré souhaité prédéterminé, une partie formant indicateur (615, 247) étant mise en œuvre sur l'ensemble d'étanchéité et une autre étant mise en œuvre sur le reste de la chambre de filtre UV (2).

13. Chambre de filtre UV (2) à des fins d'utilisation d'un filtre pour bassin,
la chambre de filtre UV (2) comportant un tube (23) servant à recevoir une lampe UV (21) servant à éclairer l'eau s'écoulant au travers de la chambre de filtre UV (2),
la chambre de filtre UV (2) comportant une partie formant enveloppe (24) dans laquelle le tube (23) est disposé avec un canal de fluide (25) au travers de la chambre de filtre UV (2) qui est défini entre le tube (23) et la partie formant enveloppe (24),
la chambre de filtre UV (2) comportant au moins un agencement d'étanchéité (6) mis en œuvre entre le tube (23) et la partie formant enveloppe (24) pour assurer l'étanchéité contre la pénétration de fluide dans la partie intérieure du tube (23) depuis le canal de fluide (25),
l'agencement d'étanchéité (6) comportant un ensemble d'étanchéité servant à des fins de montage du tube (23) sur la partie formant enveloppe (24), et un moyen d'étanchéité servant à former un joint d'étanchéité entre l'ensemble d'étanchéité et le tube (23),
dans lequel l'ensemble d'étanchéité comporte un écrou (61) à des fins de mise en prise avec la partie formant enveloppe (24), et qui porte une douille (62), et le moyen d'étanchéité comporte un joint d'étanchéité (63) qui est retenu entre l'écrou (61) et la douille (62) et qui est sollicité par l'écrou (61) et la douille (62) en contact étanche avec le tube (23) et crée un joint d'étanchéité contre la surface extérieure du tube au fur et à mesure que l'écrou (61) est mis en prise sur la partie formant enveloppe (24).
